(19)

Europäisches
Patentamt
European
Patent Office
Office européen
des brevets

(11)    **EP 2 187 026 B1**

(12)                    **EUROPEAN PATENT SPECIFICATION**

(45) Date of publication and mention
of the grant of the patent:
**09.01.2013  Bulletin 2013/02**

(21) Application number: **08831192.3**

(22) Date of filing: **11.09.2008**

(51) Int Cl.:
*F02D 21/08* (2006.01)       *F02D 41/04* (2006.01)
*F02D 41/14* (2006.01)       *F02D 41/00* (2006.01)

(86) International application number:
**PCT/JP2008/066463**

(87) International publication number:
**WO 2009/035057 (19.03.2009 Gazette 2009/12)**

(54) **CONTROLLER OF INTERNAL COMBUSTION ENGINE**

STEUERUNG EINES VERBRENNUNGSMOTORS

RÉGULATEUR DE MOTEUR À COMBUSTION INTERNE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **12.09.2007  JP 2007237111**

(43) Date of publication of application:
**19.05.2010  Bulletin 2010/20**

(73) Proprietor: **Toyota Jidosha Kabushiki Kaisha
Toyota-shi, Aichi 471-8571 (JP)**

(72) Inventor: **SOEJIMA, Shinichi
Toyota-shi
Aichi 471-8571 (JP)**

(74) Representative: **TBK
Bavariaring 4-6
80336 München (DE)**

(56) References cited:
**EP-A2- 1 245 810       JP-A- 2002 357 147
JP-A- 2004 346 862       JP-A- 2007 100 527
JP-A- 2007 100 528       US-A- 5 727 528**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### Technical Field

The present invention relates to a control device for an internal combustion engine, and more particularly to an internal combustion engine control device that adjusts an in-cylinder air amount and an EGR rate by causing a plurality of actuators to coordinate with each other.

### Background Art

It is conventionally known that torque demand control is exercised to preselect a target torque for an internal combustion engine and achieve the target torque by regulating the operation of each actuator. A technology for exercising such torque demand control is disclosed in JP-A-2002-357147 and used to achieve both a target excess air ratio and a target torque in a region where torque is nonlinear with respect to an excess air ratio.

The technology disclosed in JP-A-2002-357147 corrects the nonlinearity of torque with respect to the excess air ratio by calculating a torque correction factor in accordance with the target excess air ratio and correcting a target air amount through the use of the torque correction factor. To consider fresh air contained in an EGR gas, this technology also calculates an EGR correction factor in accordance with a target EGR rate and corrects the target air amount with the EGR correction factor.

### Disclosure of the Invention

### Problem to be Solved by the Invention

However, the technology disclosed in JP-A-2002-357147 leaves room for improvement in terms of the achievability of the target torque. Although the torque of an internal combustion engine is affected by EGR, such an influence is not thoroughly considered in JP-A-2002-357147. Therefore, the target torque may not be accurately achieved in a situation where the EGR rate can vary. A further example is shown in EP-1245810.

The present invention has been made to address the above problem. It is an object of the present invention to provide an internal combustion engine control device that is capable of achieving the target torque with high accuracy and without being affected by EGR.

### MEANS FOR SOLVING THE PROBLEM

In order to attain the object described above, a first aspect of the present invention is a control device that is used with an internal combustion engine to adjust an in-cylinder air amount and an EGR rate by causing a plurality of actuators to coordinate with each other, the control device comprising:

target torque setup means for setting a target torque for the internal combustion engine;
target EGR rate setup means for setting a target EGR rate for the internal combustion engine;
target torque correction means for calculating a correction factor for correcting the influence of EGR on torque in accordance with the target EGR rate and an air amount, and correcting the target torque with the correction factor;
target air amount calculation means for calculating a target air amount from the corrected target torque; and
control means for controlling the operation of each of the plurality of actuators in accordance with the target air amount and the target EGR rate.

The control device for the internal combustion engine according to the present invention, wherein the plurality of actuators include a throttle, a variable valve timing mechanism which changes the valve timing of at least either an intake valve or an exhaust valve, and an EGR valve; and wherein the control means includes target throttle opening setup means which sets a target opening for the throttle in accordance with the target air amount, target valve timing setup means which sets target valve timing to be provided by the variable valve timing mechanism in accordance with the operating status of the internal combustion engine, and target EGR valve opening setup means which sets a target opening for the EGR valve in accordance with the target valve timing and the target EGR rate.

A second aspect of the present invention is the control device for the internal combustion engine according to the first aspect of the present invention, wherein the target torque correction means includes a map that defines, on an individual EGR rate basis, the relationship between the air amount and a rate of torque decrease due to the introduction of EGR, and determines the correction factor from the torque decrease rate, which is acquired by collating the target EGR rate and the air amount with the map.

A third aspect of the present invention is the control device for the internal combustion engine according to the first or second aspect of the present invention, wherein the plurality of actuators include a throttle and an EGR valve; and wherein the control means includes target throttle opening setup means which sets a target opening for the throttle in accordance with the target air amount, and target EGR valve opening setup means which sets a target opening for the EGR valve in accordance with the target EGR rate.

**Effects of the Invention**

The first aspect of the present invention makes it possible to incorporate the influence of EGR on torque into a target torque by determining a correction factor in accordance with a target EGR rate and an air amount and correcting the target torque with the correction factor. When a target air amount is calculated from the target torque into which the influence of EGR on torque is incorporated, and the operation of each actuator is controlled in accordance with the target air amount and the target EGR rate, the target torque can be achieved with high accuracy and without being affected by EGR.

The valve timing of the intake valve and exhaust valve affects the amount of internal EGR gas. In an internal combustion engine with a variable valve timing mechanism, therefore, the valve timing may change the influence of internal EGR on torque. The present invention makes it possible to provide the target EGR rate accurately and achieve the target torque with increased accuracy by setting a target opening for the EGR valve in accordance not only with the target EGR rate but also with target valve timing provided by the variable valve timing mechanism.

The second aspect of the present invention makes it possible to provide accurate torque control without increasing the computational load on the control device by preparing a map that defines, on an individual EGR rate basis, the relationship between the air amount and a rate of torque decrease due to the introduction of EGR.

As the target air amount is calculated from the target torque into which the influence of EGR on torque is incorporated, the third aspect of the present invention makes it possible to achieve the target torque with high accuracy by setting a target opening for the throttle in accordance with the target air amount and at the same time setting a target opening for the EGR valve in accordance with the target EGR rate.

**BRIEF DESCRIPTION OF DRAWINGS**

Fig. 1 is a block diagram illustrating the configuration of an internal combustion engine control device according to a first embodiment of the present invention.
Fig. 2 is a graph indicating the impact of EGR rates on the relationship between torque and an air amount.
Fig. 3 is an illustration of an example of the map to determine the torque ratio.
Fig. 4 is a diagram that illustrates the relationship between fresh air and EGR gas, which constitute the total amount of in-cylinder gas, and indicates the comparison between a case where external EGR is provided and a case where no external EGR is provided.
Fig. 5 is a block diagram illustrating the configuration of an internal combustion engine control device according to a first embodiment of the present invention.

**DESCRIPTION OF NOTATIONS**

2     target torque setup section

4     target EGR rate setup section

6     correction factor setup section

8     target torque correction section

10     target air amount calculation section

12     throttle opening calculation section

14     valve timing calculation section

16    EGR valve opening calculation section

20    target efficiency setup section

22    target torque correction section

24    estimated torque calculation section

26    torque efficiency calculation section

28    target air-fuel ratio setup section

30    ignition timing calculation section

32    fuel injection amount calculation section

**Best Mode for Carrying Out the Invention**

**First Embodiment**

A first embodiment of the present invention will now be described with reference to the accompanying drawings.

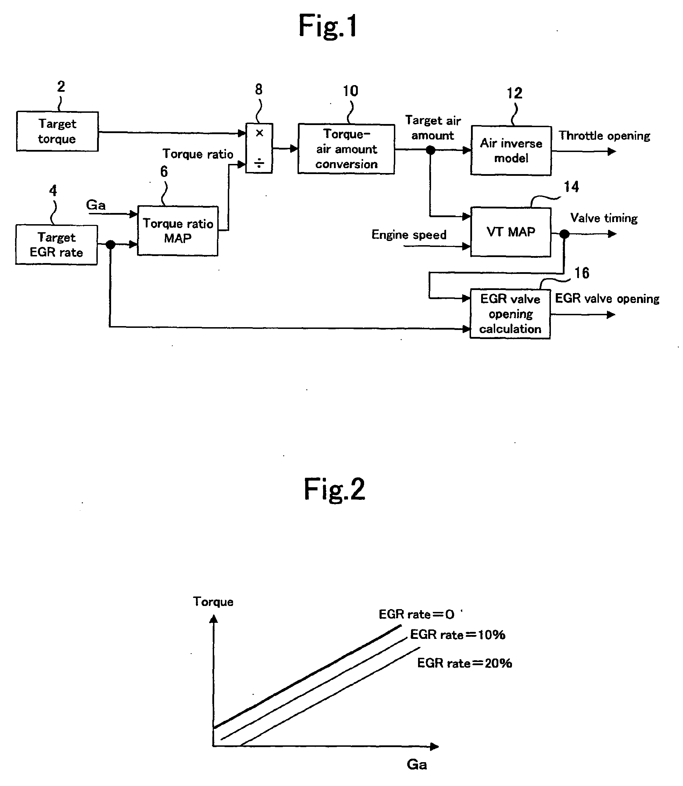

Fig. 1 is a block diagram illustrating the configuration of an internal combustion engine control device according to the first embodiment of the present invention. The control device according to the present embodiment is applicable to an internal combustion engine having at least a throttle, a variable valve timing mechanism (hereinafter referred to as the VVT mechanism), and an EGR valve, and configured as a device for controlling the operations of such actuators. It is assumed that the VVT mechanism is provided each for an intake valve and an exhaust valve. The EGR valve is mounted on an EGR pipe, which bypasses a cylinder and connects an intake pipe and an exhaust pipe. The configuration of the control device according to the present embodiment is described below with reference to Fig. 1.
The control device according to the present embodiment includes a plurality of computational elements 2, 4, 6, 8, 10, 12, 14, and 16. In accordance with input information, the control device performs computations in accordance with a predetermined computation rule by using the computational elements 2, 4, 6, 8, 10, 12, 14, and 16, and determines operation command values for the actuators, namely, a throttle opening, valve timing, and an EGR valve opening. The control device then sets the determined operation command values in drivers (not shown) for the actuators and controls the operations of the actuators through the drivers. The functions of the computational elements 2, 4, 6, 8, 10, 12, 14, and 16 and the sequence of signal processing between the computational elements are described below.
A power train manager (not shown), which is at a higher level than a control system, numerically enters a demand concerning the torque of the internal combustion engine into the control device. The demanded torque includes not only torque demanded by a driver, but also torque required for vehicle control such as VSC. A target torque setup section 2 sets a target torque for the internal combustion engine on the basis of the entered demanded torque. When the target torque is to be set, a process is performed, for instance, for adding damping torque to the demanded torque. The set target torque is output to a target torque correction section 8.
Further, the control device according to the present embodiment sets a target EGR rate, in addition to the aforementioned target torque, as a target value for control for determining the operation command value for each actuator. The target EGR rate is set by a target EGR rate setup section 4. The target EGR rate setup section 4 sets the target EGR rate by using a map whose axes represent a plurality of parameters indicating the operating status of the internal combustion engine, such as an engine speed and load. The set target EGR rate is output to a correction factor setup section 6 and an EGR valve opening calculation section 16.
As mentioned under "Problem to be Solved by the Invention," the EGR rate affects the torque of the internal combustion engine. The target torque set by the target torque setup section 2 is converted to a target air amount by a later-described computational element. The target air amount is further converted to a throttle opening. However, even when the throttle opening remains unchanged, the amount of air actually taken into a cylinder (the amount of fresh air) varies with the EGR rate. Such a variation then becomes evident as a torque error.
To address the above problem, the control device according to the present embodiment incorporates the influence of EGR on torque into the target torque and calculates the target air amount from the target torque into which the influence of EGR on torque is incorporated. As a concrete method for achieving the above purpose, the present embodiment calculates a correction factor for correcting the influence of EGR on torque in accordance with the target EGR rate and air amount and then corrects the target torque with the correction factor. This method is implemented by the correction factor setup section 6 and target torque correction section 8, which are described below.

The correction factor setup section 6 calculates a torque ratio defined by the following equation as the aforementioned correction factor. In Equation 1 below, Trq (EGR rate, Ga) expresses torque by using a function of the fresh air amount Ga and EGR rate. Fig. 2 is a graph indicating the results obtained when the relationship between torque and Ga is measured at different EGR rates. As is obvious from the graph, the torque can be expressed as a function of the EGR rate and Ga. In Equation 1, Trq (0, Ga) denotes a torque that prevails when the EGR rate is zero.

$$\textbf{Torque ratio = Trq (EGR rate, Ga)/Trq (0, Ga) --- Equation 1}$$

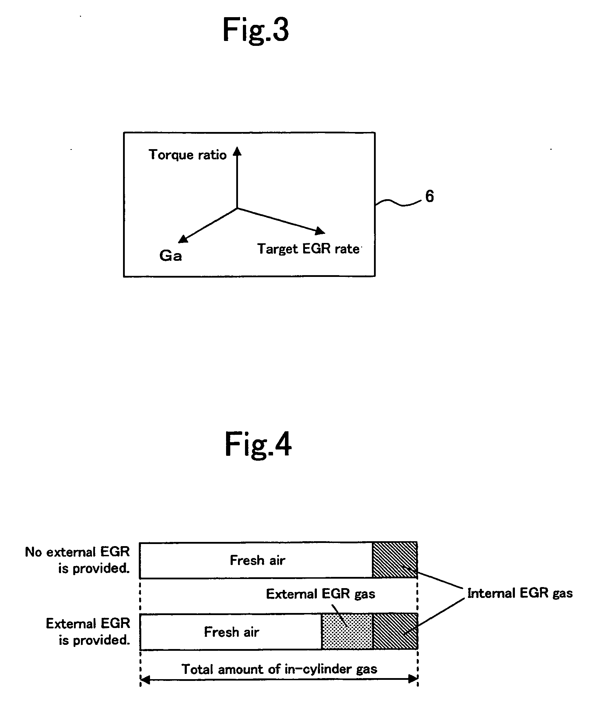

The correction factor setup section 6 acquires a currently measured or currently estimated air amount (fresh air amount) as Ga for torque ratio calculation. As the EGR rate, the target EGR rate entered from the target EGR rate setup section 4 is used. The correction factor setup section 6 stores a torque ratio map, which determines the torque ratio by using Ga and target EGR rate as parameters. An example of the torque ratio map is shown in Fig. 3. As the torque is also affected by the engine speed, the torque may be expressed as a function of the EGR rate, Ga, and engine speed with the engine speed added to the torque ratio map as a parameter.

The target torque and the torque ratio, which is used as a correction factor, enter the target torque correction section 8. The target torque correction section 8 corrects the target torque by dividing it with the torque ratio, and outputs the corrected target torque to a target air amount calculation section 10. As shown in Fig. 2, the torque decreases with an increase in the EGR rate if Ga remains unchanged. Therefore, the torque ratio defined by Equation 1 reaches a maximum value of 1 when the target EGR rate is zero. When the target EGR rate is set for the introduction of EGR, the torque ratio is smaller than 1. In other words, the torque ratio indicates a rate of torque decrease due to the introduction of EGR. When the torque ratio is 1, the target torque calculated by the target torque setup section 2 is output as is to the target air amount calculation section 10. When, on the other hand, the torque ratio is smaller than 1, the target torque is increased by dividing it with the torque ratio to output the increased target torque to the target air amount calculation section 10.

The target air amount calculation section 10 converts the target torque (corrected by the torque ratio) to an air amount by using a torque-to-air amount conversion map. The torque-to-air amount conversion map is a multidimensional map whose axes represent a plurality of parameters such as the corrected target torque. For this map, ignition timing, engine speed, air-fuel ratio (A/F ratio), and various other operating conditions affecting the torque can be set as parameters. Values (present values) derived from current operating status information are entered as these parameters. The target air amount calculation section 10 regards the air amount converted from the corrected target torque as the target air amount for the internal combustion engine, and outputs the target air amount to a throttle opening calculation section 12 and a valve timing calculation section 14.

The throttle opening calculation section 12 converts the target air amount to a throttle opening by using an inverse model of an intake air model. More specifically, the throttle opening calculation section 12 calculates a throttle opening that can provide the target air amount. When the inverse model is used, an air flow meter output value, intake air temperature, and other operating conditions affecting the throttle opening can be set as parameters. Values (present values) derived from the current operating status information are entered as these parameters. The throttle opening calculation section 12 regards the throttle opening converted from the target air amount as a target throttle opening, and sets the target throttle opening for a throttle driver. The throttle driver controls the throttle in such a manner as to provide the target throttle opening.

The valve timing calculation section 14 is provided with a VT map, which stores the relationship between intake and exhaust valve timing settings, target air amount, and engine speed. The valve timing calculation section 14 accesses the VT map to read valve timing settings associated with an entered target air amount and engine speed, and sets the read valve timing settings for a VVT mechanism driver as target valve timing settings for the valves. The VVT mechanism driver controls the VVT mechanism in such a manner that the valves operate in accordance with the target valve timing settings. Further, the target valve timing settings are also output to the EGR valve opening calculation section 16.

The EGR valve opening calculation section 16 calculates a target opening for the EGR valve from the entered target valve timing settings and target EGR rate. An EGR valve opening calculation method according to the present embodiment is described below with reference to Fig. 4.

Fig. 4 is a diagram that illustrates the relationship between fresh air and EGR gas, which constitute the total amount of in-cylinder gas, and indicates the comparison between a case where external EGR is provided and a case where no external EGR is provided. The upper graph in Fig. 4 shows the relationship between internal EGR gas and fresh air in a situation where external EGR is not introduced. The ratio between the fresh air and internal EGR gas can be changed by allowing the VVT mechanism to change the valve timing. In other words, the ratio between the fresh air and internal EGR gas can be correlated with the valve timing.

The lower graph in Fig. 4 shows a case where external EGR is introduced by opening the EGR valve while the VVT mechanism is operating as indicated by the upper graph. The portion occupied by the fresh air as indicated by the upper graph is subdivided and partly replaced by an external EGR gas. The ratio between the fresh air and external EGR gas can be correlated with the opening of the EGR valve.

In a state indicated by the lower graph in Fig. 4, the EGR rate of an in-cylinder gas can be expressed by Equation 2 below. In Equation 2, the symbol "Gt" denotes the total amount of gas that enters a cylinder. The symbol "a" denotes the ratio of internal EGR gas to the total amount of in-cylinder gas, whereas the symbol "b" denotes the ratio of external EGR gas to the amount of gas other than the internal EGR gas.

$$EGR\ rate = (Gt \times a + Gt \times (1 - a) \times b)/Gt \quad \text{--- Equation 2}$$

Ratio a correlates with valve timing as described above. Therefore, ratio a can be expressed by function f (VT), where VT denotes valve timing. Ratio b, on the other hand, correlates with the EGR valve opening. Therefore, ratio b can be expressed by function g (EGR valve opening). Equation 3 is obtained when Equation 2 is rewritten with functions f and g.

$$EGR\ rate = f\ (VT) + (1 - f\ (VT)) \times g\ (EGR\ valve\ opening) \quad \text{--- Equation 3}$$

Equation 4 below is obtained when Equation 3 is modified to express function g (EGR valve opening) with function f (VT).

$$g\ (EGR\ valve\ opening) = (EGR\ rate - f\ (VT))/\ (1 - f\ (VT)) \quad \text{-- Equation 4}$$

Equation 5, which determines the EGR valve opening, is obtained when Equation 4 above is converted with inverse function $g^{-1}$.

$$EGR\ valve\ opening = g^{-1}\ ((EGR\ rate - f\ (VT))/\ (1 - f\ (VT))) \quad \text{--- Equation 5}$$

When VT in Equation 5 above is substituted by target valve timing and the EGR rate in Equation 5 is substituted by the target EGR rate, the EGR valve opening for providing the target EGR rate can be calculated. The EGR valve opening calculation section 16 regards the calculated EGR valve opening as a target EGR valve opening, and sets the target EGR valve opening for an EGR valve driver. The EGR valve driver controls the EGR valve in such a manner as to provide the target EGR valve opening.

As described above, the control device according to the present embodiment corrects the target torque with the correction factor (torque ratio) calculated from the target EGR rate. This ensures that the target torque is increased by the amount of torque decrease caused by EGR introduction. When the target air amount is calculated from the increased target torque to control the operation of each actuator in accordance with the target air amount and target EGR rate, the target torque can be achieved with high accuracy even in a situation where EGR is introduced. In addition, the target opening for the EGR valve is set in consideration of not only the target EGR rate but also target valve timing to be provided by the VVT mechanism. Therefore, the target EGR rate can be accurately achieved even in a situation where the VVT mechanism is operating.

In the present embodiment, the target torque setup section 2 corresponds to the "target torque setup means" according to the first aspect of the present invention; and the target EGR rate setup section 4 corresponds to the "target EGR rate setup means" according to the first aspect of the present invention. The correction factor setup section 6 and target torque correction section 8 constitute the "target torque correction means" according to the first aspect of the present invention. The target air amount calculation section 10 corresponds to the "target air amount calculation means" according to the first aspect of the present invention. The throttle opening calculation section 12, valve timing calculation section 14, and EGR valve opening calculation section 16 constitute the "control means" according to the first aspect of the present invention.

**Second Embodiment**

A second embodiment of the present invention will now be described with reference to an accompanying drawing.

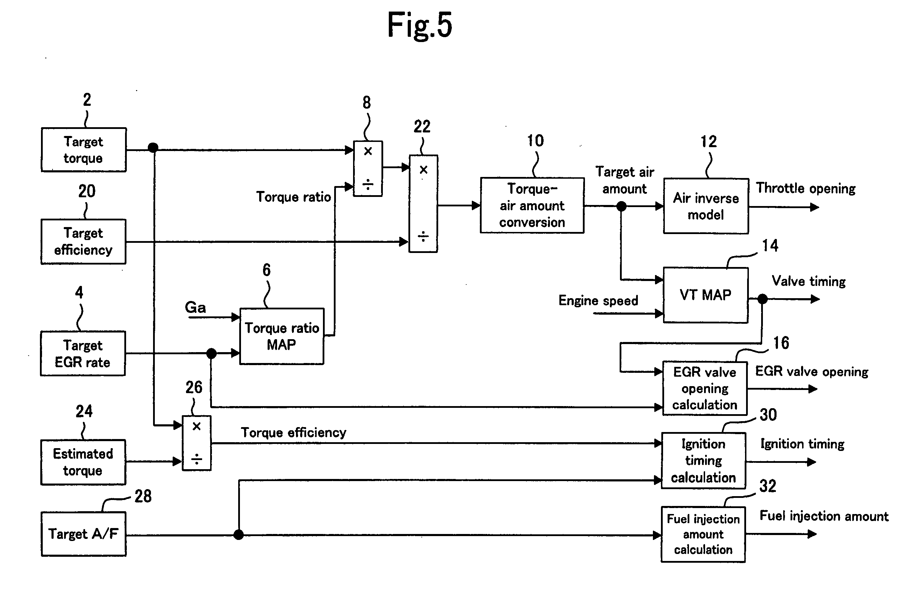

Fig. 5 is a block diagram illustrating the configuration of an internal combustion engine control device according to the second embodiment of the present invention. The control device according to the present embodiment is based on a control structure according to the first embodiment. In the control structure employed by the control device according to the present embodiment, however, an ignition device and a fuel injection device are additionally handled as control targets. More specifically, the control structure shown in Fig. 5 assumes that the throttle, VVT mechanism, EGR valve, ignition device, and fuel injection device are the actuators to be controlled. All these actuators are coordinately controlled in a single control structure. The configuration of the control device according to the present embodiment will be described below with reference to Fig. 5. However, elements similar to those of the control device according to the first embodiment will be described only briefly or omitted entirely, whereas elements different from those of the control device according to the first embodiment will be described in detail.

As control target values for determining the operation command values for the actuators, the control device according to the present embodiment sets target efficiency and a target air-fuel ratio in addition to the target torque and target EGR rate. The target efficiency is set by a target efficiency setup section 20, whereas the target air-fuel ratio is set by a target air-fuel ratio setup section 28.

The power train manager (not shown), which is at a higher level than the control system, numerically enters various demands concerning the efficiency of the internal combustion engine into the target efficiency setup section 20. Here, the efficiency is a nondimensional parameter that is set with reference to MBT ignition timing, and takes a value of 1 under normal conditions. When, for instance, thermal energy is to be used to raise the temperature of exhaust gas for catalyst warm-up or the torque is to be increased by advancing the ignition timing, efficiency of smaller than 1 (normal value) is demanded. If only one demanded efficiency is entered, the target efficiency setup section 20 sets such efficiency as the target efficiency. If, on the other hand, a plurality of demanded efficiencies are simultaneously entered, the target efficiency setup section 20 performs mediation, for instance, to select the minimum value and sets the mediation result as the target efficiency. The target efficiency set in this manner is output to a target torque correction section 22, which will be described later.

The power train manager numerically enters various demands concerning the air-fuel ratio (A/F ratio) into the target air-fuel ratio setup section 28. For example, the numerically entered demands indicate an air-fuel ratio for creating an atmosphere where a reaction readily occurs in a catalyst for catalyst warm-up or an air-fuel ratio for conducting a lean-burn operation for pump loss reduction. If only one demanded air-fuel ratio is entered, the target air-fuel ratio setup section 28 sets such a ratio as the target air-fuel ratio. If, on the other hand, a plurality of demanded air-fuel ratios are entered, the target air-fuel ratio setup section 28 performs mediation between the entered air-fuel ratios and sets the mediation result as the target air-fuel ratio. The target air-fuel ratio set in this manner is output to an ignition timing calculation section 30 and a fuel injection amount calculation section 32, which will be described later.

In the control structure shown in Fig. 5, the target torque correction section 22 is positioned between the target torque correction section 8 and the target air amount calculation section 10. The target torque corrected by the target torque correction section 8 enters the target torque correction section 22 together with the target efficiency set by the target efficiency setup section 20. The target torque correction section 22 further corrects the target torque by dividing it with the target efficiency, and outputs the corrected target torque to the target air amount calculation section 10. When the target efficiency is 1, which is a normal value, the target torque corrected by the target torque correction section 8 is output as is to the target air amount calculation section 10. When, on the other hand, the target efficiency is smaller than 1, the target torque is further increased by dividing it with the target efficiency. The increased target torque is then output to the target air amount calculation section 10.

In the control structure shown in Fig. 5, the target torque set by the target torque setup section 2 is not only output to the target torque correction section 8 but also output to a torque efficiency calculation section 26, which will be described later. The target torque and an estimated torque calculated by an estimated torque calculation section 24 are entered into the torque efficiency calculation section 26.

The estimated torque calculation section 24 estimates the torque of the internal combustion engine by calculating it from the operating status information. More specifically, the estimated torque calculation section 24 first calculates an estimated air amount prevailing under current air amount conditions by using the intake air model. The air amount conditions include, for instance, a throttle opening sensor output value, air flow meter output value, valve timing, and intake air temperature. Next, the estimated torque calculation section 24 collates the estimated air amount, which is calculated by using the air model, with a torque map, and converts the estimated air amount to torque by using the torque map. The torque map is a multidimensional map whose axes represent a plurality of parameters such as the estimated air amount. For this map, ignition timing, engine speed, air-fuel ratio (A/F ratio), valve timing, and various other operating conditions affecting the torque can be set as parameters. Values (present values) derived from current operating status information are entered as these parameters. However, it is assumed that the ignition timing is set to MBT. The estimated torque calculation section 24 regards the torque converted from the estimated air amount as the estimated torque of the internal combustion engine, and outputs the estimated torque to the torque efficiency calculation section 26.

The torque efficiency calculation section 26 calculates the ratio between the entered target torque and estimated torque, and regards the result of calculation as calculated torque efficiency. In a transient state where the air amount is changing, the estimated torque varies with the air amount, thereby changing the torque efficiency accordingly. In a stationary state where the air amount is constant, however, the estimated torque coincides with the target torque (the target torque corrected by the target torque correction section 8) so that the torque efficiency coincides with the aforementioned target efficiency. The torque efficiency calculation section 26 outputs the calculated torque efficiency to the ignition timing calculation section 30.

The ignition timing calculation section 30 first performs calculations on the entered torque efficiency to determine the amount of retardation from MBT. An ignition timing map is used to calculate the retardation amount. The ignition timing map is a multidimensional map whose axes represent a plurality of parameters such as the torque efficiency. For this map, the air-fuel ratio (A/F ratio), engine speed, and various other operating conditions affecting the determination of ignition timing can be set as parameters. Values (present values) derived from the current operating status information are entered as these parameters. However, the target air-fuel ratio set by the target air-fuel ratio setup section 28 is used as the air-fuel ratio. The ignition timing map is such that the retardation amount increases with a decrease in the torque efficiency. The ignition timing calculation section 30 calculates target ignition timing from the retardation amount, which is determined from the torque efficiency, and basic ignition timing, which is determined from the operating status of the internal combustion engine, and sets the calculated target ignition timing for an ignition device driver. The ignition device driver controls the ignition device in accordance with the target ignition timing.

The fuel injection amount calculation section 32 calculates a fuel injection amount from the target air-fuel ratio and the air amount, and sets the calculated fuel injection amount as a target fuel injection amount for a fuel injection device driver. The fuel injection device driver controls the fuel injection device in accordance with the target fuel injection amount.

As described above, the control device according to the present embodiment can accurately achieve the target torque and target EGR rate while coordinately controlling the throttle, VVT mechanism, EGR valve, ignition device, and fuel injection device with a single control structure.

Other

While the present invention has been described in terms of preferred embodiments, it is not limited to the preferred embodiments, but extends to various modifications that nevertheless fall within the scope of the appended claims. For example, the following modifications can be made to the preferred embodiments of the present invention.

The embodiments described above assume that the present invention is applied to an internal combustion engine with a VVT mechanism. However, the present invention can also be applied to an internal combustion engine that has no VVT mechanism and uses fixed valve timing. Further, if the employed internal combustion engine includes a variable valve lift mechanism that changes the maximum lift amount of an intake valve, the air amount can be adjusted by changing the maximum lift amount of the intake valve instead of the opening of the throttle. Another alternative is to adjust the air amount by coordinately controlling the opening of the throttle and the maximum lift amount of the intake valve. The present invention is also applicable to an internal combustion engine without an EGR valve. If the internal combustion engine includes a VVT mechanism, the EGR rate can be adjusted by means of internal EGR. In such an instance, valve timing should be changed in accordance with the target air amount and target EGR rate.

**Claims**

1. A control device that is used with an internal combustion engine to adjust an in-cylinder air amount and an EGR rate by causing a plurality of actuators to coordinate with each other, the control device comprising:

target torque setup means (2) for setting a target torque for the internal combustion engine;
target EGR rate setup means (4) for setting a target EGR rate for the internal combustion engine;

correction factor calculation means (6) for calculating a correction factor for correcting the influence of EGR on torque in accordance with the target EGR rate and a measured or estimated value of a current air amount;

target air amount calculation means (10) for calculating a target air amount from the value obtained by correcting the target torque with the correction factor; and

control means (12, 14, 16) for controlling the operation of each of the plurality of actuators in accordance with the target air amount and the target EGR rate;

**characterised in that** the plurality of actuators include a throttle, a variable valve timing mechanism which changes the valve timing of at least either an intake valve or an exhaust valve, and an EGR valve; and wherein the control means includes target throttle opening setup means (12) which sets a target opening for the throttle in accordance with the target air amount, target valve timing setup means (14) which sets target valve timing to be provided by the variable valve timing mechanism in accordance with the operating status of the internal combustion engine, and target EGR valve opening setup means (16) which sets a target opening for the EGR valve in accordance with the target valve timing and the target EGR rate.

2. The control device for the internal combustion engine according to claim 1, wherein the correction factor calculation means (6) includes a map that defines, on an individual EGR rate basis, the relationship between the air amount and a rate of torque decrease due to the introduction of EGR, and determines the correction factor from the torque decrease rate, which is acquired by collating the target EGR rate and the measured or estimated value of the current air amount with the map.

**Patentansprüche**

1. Steuervorrichtung, die mit einem Verbrennungsmotor verwendet wird, um eine im Zylinder herrschende Luftmenge und eine EGR-Rate einzustellen, indem bewirkt wird, dass eine Vielzahl an Aktuatoren miteinander koordiniert werden, wobei die Steuervorrichtung folgendes aufweist:

eine Sollmomenteinstelleinrichtung (2) zum Einstellen eines Sollmoments für den Verbrennungsmotor;

eine Soll-EGR-Rateneinstelleinrichtung (4) zum Einstellen einer Soll-EGR-Rate für den Verbrennungsmotor;

eine Korrekturfaktorberechnungseinrichtung (6) zum Berechnen eines Korrekturfaktors zum Korrigieren des Einflusses des EGR auf das Moment in Übereinstimmung mit der Soll-EGR-Rate und einem gemessenen oder geschätzten Wert einer Ist-Luftmenge;

eine Sollluftmengenberechnungseinrichtung (10) zum Berechnen einer Sollluftmenge aus dem Wert, der erlangt wird, indem das Sollmoment mit dem Korrekturfaktor korrigiert wird; und

eine Steuereinrichtung (12, 14, 16) zum Steuern des Betriebs von jedem der Vielzahl an Aktuatoren gemäß der Sollluftmenge und der Soll-EGR-Rate;

**dadurch gekennzeichnet, dass**
die Vielzahl an Aktuatoren eine Drossel, einen variablen Ventilzeitmechanismus, der die Ventilzeit von zumindest entweder einem Einlassventil oder einem Auslassventil ändert, und ein EGR-Ventil umfassen; und wobei die Steuereinrichtung eine Solldrosselöffnungseinstelleinrichtung (12), die eine Sollöffnung für die Drossel gemäß der Sollluftmenge einstellt, eine Sollventilzeiteinstelleinrichtung (14), die eine Sollventilzeit, die durch den variablen Ventilzeitmechanismus vorzusehen ist, gemäß dem Betriebszustand des Verbrennungsmotors einstellt, und eine Soll-EGR-Ventilöffnungseinstelleinrichtung (16) hat, die eine Sollöffnung für das EGR-Ventil gemäß der Sollventilzeit und der Soll-EGR-Rate einstellt.

2. Steuervorrichtung für den Verbrennungsmotor gemäß Anspruch 1, wobei die Korrekturfaktorberechnungseinrichtung (6) eine Tabelle aufweist, die auf der Basis einer individuellen EGR-Rate die Beziehung zwischen der Luftmenge und einer Rate einer Momentabnahme aufgrund des Einleitens an EGR definiert und den Korrekturfaktor aus der Momentabnahmerate bestimmt, die erlangt wird, indem die Soll-EGR-Rate und der gemessene oder geschätzte Wert der Ist-Luftmenge mit der Tabelle abgeglichen wird.

**Revendications**

1. Dispositif de commande qui est utilisé avec un moteur à combustion interne afin de régler une quantité d'air dans le cylindre et un taux de recirculation des gaz d'échappement en amenant une pluralité d'actionneurs à coordonner les uns avec les autres, le dispositif de commande comprenant :

un moyen (2) de réglage de couple cible destiné à régler un couple cible pour le moteur à combustion interne ;

un moyen (4) de réglage de taux cible de recirculation des gaz d'échappement destiné à régler un taux cible de recirculation des gaz d'échappement pour le moteur à combustion interne ;

un moyen (6) de calcul de facteur de correction destiné à calculer un facteur de correction pour corriger l'influence d'une recirculation des gaz d'échappement sur un couple selon le taux cible de recirculation des gaz d'échappement et une valeur mesurée ou estimée d'une quantité d'air actuelle ;

un moyen (10) de calcul de quantité cible d'air destiné à calculer une quantité cible d'air à partir de la valeur obtenue en corrigeant le couple cible avec le facteur de correction ; et

un moyen de commande (12, 14, 16) destiné à commander le fonctionnement de chacun de la pluralité d'actionneurs selon la quantité cible d'air et le taux cible de recirculation des gaz d'échappement.

**caractérisé en ce que** la pluralité d'actionneurs comporte un papillon des gaz, un mécanisme de distribution à calage variable qui modifie le calage de distribution d'au moins une soupape d'admission ou une soupape d'échappement, et une soupape de recirculation des gaz d'échappement ; et où le moyen de commande comporte un moyen de réglage d'ouverture cible de papillon des gaz (12) qui règle une ouverture cible pour le papillon des gaz selon la quantité cible d'air, un moyen (14) de réglage de calage cible de distribution qui règle le calage cible de distribution pour être fourni par le mécanisme de distribution à calage variable selon l'état de fonctionnement du moteur à combustion interne , et un moyen (16) de réglage d'ouverture cible de soupape de recirculation des gaz d'échappement qui règle une ouverture cible de soupape de recirculation des gaz d'échappement selon le calage cible de distribution et le taux cible de recirculation des gaz d'échappement.

2. Dispositif de commande pour le moteur à combustion interne selon la revendication 1, dans lequel le moyen (6) de calcul de facteur de correction comporte une carte qui définit, sur une base de taux individuel de recirculation des gaz d'échappement, la relation entre la quantité d'air et un taux de diminution de couple du à l'introduction de la recirculation des gaz d'échappement, et détermine le facteur de correction à partir du taux de diminution de couple, qui est acquis en assemblant le taux cible de recirculation des gaz d'échappement et la valeur mesurée ou estimée de la quantité d'air actuelle avec la carte.

# Fig.3

Torque ratio

Ga

Target EGR rate

6

# Fig.4

No external EGR is provided.

Fresh air

External EGR gas

Internal EGR gas

External EGR is provided.

Fresh air

Total amount of in-cylinder gas

# Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002357147 A
- EP 1245810 A